# EUROPEAN PATENT APPLICATION

(11) **EP 4 332 532 A1**
(43) Date of publication of application: **06.03.2024**
(21) Application number: 22795611.7
(22) Date of filing: 18.04.2022
(51) Int. Cl.: G01L 19/14

(54) **PHYSICAL QUANTITY MEASURING DEVICE**

(30) Priority: 28.04.2021 JP 2021075983
(71) Applicant: NAGANO KEIKI CO., LTD., Tokyo 143-8544 (JP)
(72) Inventor: ARUGA, Daiki, Tokyo 143-8544 (JP); YANAGISAWA, Ryosuke, Tokyo 143-8544 (JP); KUBO, Ryousuke, Tokyo 143-8544 (JP); MURAMATSU, Hideki, Tokyo 143-8544 (JP)
(74) Representative: Page White Farrer
(86) International application number: PCT/JP2022/017982
(87) International publication number: WO 2022/230698

(57) **Abstract**

A physical quantity measuring device (1) includes: a sensor module (5) including a detector (54) to detect a physical quantity of a measurement target fluid; a circuit board electrically connected with the sensor module (5) and including a first board (41) and a second board (42) facing each other; a first casing (2) that houses the sensor module (5) and the first board (41); and a second casing (3) attached to the first casing (2) and housing the second board (42). The first board (41) is provided with first cutouts. The second board (42) is provided with second cutouts. The first casing (21) is provided with first supports (211) inserted through the first cutouts to support the second board (42), the first supports (211) being integrated with the first casing (21). The second casing (3) is provided with second supports (311) inserted through the second cutouts, the second supports (311) being integrated with the second casing (3).

## Description

### TECHNICAL FIELD

The present invention relates to a physical quantity measuring device.

### BACKGROUND ART

A physical quantity measuring device whose circuit board is configured to be supported by a cylindrical casing has been known (for instance, Patent Literature 1).

In Patent Literature 1, a first circuit board, which is engaged with a step portion provided on a cylindrical casing, is held between a press portion of a cover and the step portion of the cylindrical casing. Thus, the first circuit board can be securely held.

### CITATION LIST

### PATENT LITERATURE(S)

Patent Literature 1: JP 2017-211260 A

### SUMMARY OF THE INVENTION

### PROBLEM(S) TO BE SOLVED BY THE INVENTION

In Patent Literature 1, a second circuit board is supported by the first circuit board via a joint pin and a connector provided between the first circuit board and the second circuit board. In other words, the second circuit board is not directly supported by the cylindrical casing but is supported via electronic components (i.e. the first circuit board, the joint pin, and the connector). In this case, since the electronic components such as the first circuit board, the joint pin, and the connector are not designed to support other components, the support for the second circuit board may be insufficient. However, a new component for supporting the second circuit board results in an increase in the number of components and complicated manufacturing process. Accordingly, an arrangement capable of securely supporting a plurality of circuit boards without increasing the number of components has been desired.

An object of the invention is to provide a physical quantity measuring device capable of securely supporting a plurality of circuit boards without increasing the number of components.

### MEANS FOR SOLVING THE PROBLEM(S)

A physical quantity measuring device according to an aspect of the invention includes: a sensor module including a detector configured to detect a physical quantity of a measurement target fluid; a circuit board electrically connected with the sensor module, the circuit board including a first board and a second board facing each other; a first casing that houses the sensor module and the first board; and a second casing that houses the second board, the second casing being attached to the first casing, in which the first board is provided with a plurality of first cutouts, the second board is provided with a plurality of second cutouts, the first casing is provided with a plurality of first supports inserted through the first cutouts to support the second board, the first supports being integrated with the first casing, and the second casing is provided with a plurality of second supports inserted through the second cutouts to support the first board, the second supports being integrated with the second casing.

According to the above aspect of the invention, the first board and the second board are provided with the plurality of first cutouts and the plurality of second cutouts, respectively. The first supports of the first casing are inserted through the first cutouts of the first board, and the first board is supported by the second supports of the second casing. In other words, the first board, whose position is determined by the first supports, is supported by the second supports. Similarly, the second supports of the second casing are inserted through the second cutouts of the second board, and the second board is supported by the first supports of the first casing. In other words, the second board, whose position is determined by the second supports, is supported by the first supports. As described above, the first board and the second board of the circuit board, whose positions are determined by the first supports and the second supports respectively integrated with the first casing and the second casing, are supported by the first supports and the second supports. This enables the first board and the second board to be securely supported without increasing the number of components.

A physical quantity measuring device according to another aspect of the invention includes: a sensor module including a detector configured to detect a physical quantity of a measurement target fluid; a circuit board electrically connected with the sensor module, the circuit board including a first board and a second board facing each other; a first casing that houses the sensor module and the first board; a second casing that houses the second board, the second casing being attached to the first casing; a display provided for the second casing; and a support member housed in the second casing, the support member including a display holder that holds the display, in which the first board is provided with a plurality of first cutouts, the second board is provided with a plurality of second cutouts, the first casing is provided with a plurality of first supports inserted through the first cutouts to support the second board, the first supports being integrated with the first casing, and the support member is provided with a plurality of second supports inserted through the second cutouts to support the first board, the second supports being integrated with the support member.

According to the above aspect of the invention, the first board and the second board are provided with the plurality of first cutouts and the plurality of second cutouts, respectively. The first supports of the first casing are inserted through the first cutouts of the first board, and the first board is supported by the second supports of the support member that holds the display. In other words, the first board, whose position is determined by the first supports, is supported by the second supports. Similarly, the second supports of the support member are inserted through the second cutouts of the second board, and the second board is supported by the first supports of the first casing. In other words, the second board, whose position is determined by the second supports, is supported by the first supports. As described above, the first board and the second board of the circuit board, whose positions are determined by the first supports and the second supports respectively integrated with the first casing and the support member, are supported by the first supports and the second supports. This enables the first board and the second board to be securely supported without increasing the number of components.

In the physical quantity measuring device according to the above aspects of the invention, it is preferable that the first casing is provided with a contact portion, and an elastic support is interposed between the contact portion and the first board.

According to the above arrangement, since the elastic support member is interposed between the contact portion of the first casing and the first board, even when there is a manufacturing error in the thickness of the first board, such an error can be absorbed by the elastic support member. Accordingly, the first board can be securely supported.

In the physical quantity measuring device according to the above aspects of the invention, it is preferable that the plurality of first supports are columnar components protruding toward the second casing, and the plurality of second supports are columnar components protruding toward the first casing.

According to the above arrangement, the first board and the second board are supported by the first supports and the second supports in a form of columnar protrusions. This enables the first board and the second board to be supported with a simple structure.

In the physical quantity measuring device according to the above aspects of the invention, it is preferable that a groove is formed between the first casing and the second casing, and the physical quantity measuring device further includes a sealing member including an annular body portion whose position is determined by the plurality of first supports and a sealing portion extending toward an outer periphery from the body portion, the sealing portion being disposed in the groove, the sealing portion being thinner than the body portion.

In the above arrangement, the position of the body portion of the sealing member is determined by the plurality of first supports. The sealing member is thus kept from being misaligned in assembling the physical quantity measuring device. The physical quantity measuring device is thus easily assembled. Further, in the above arrangement, since the sealing portion, which is an extension of the body portion having a thickness smaller than that of the body portion, is disposed in the groove formed between the first casing and the second casing, the width of the groove can be reduced. This reduces the thicknesses of wall portions of the first casing and the second casing necessary for disposing the sealing member, thus achieving the downsize of the physical quantity measuring device.

In the physical quantity measuring device according to the above aspects of the invention, the body portion is preferably supported by the first board.

According to the above arrangement, the body portion of the sealing member can be supported by the first board, thus eliminating the necessity of a separate structure for supporting the sealing member. This simplifies the structure of the first casing and the second casing.

### BRIEF DESCRIPTION OF THE DRAWINGS

Fig. 1 is a perspective view of an outline of a physical quantity measuring device according to a first exemplary embodiment of the invention.
Fig. 2 is another perspective view of the outline of the physical quantity measuring device viewed in a direction different from the direction in Fig. 1.
Fig. 3 is an exploded perspective view of the outline of the physical quantity measuring device according to the first exemplary embodiment.
Fig. 4 is another exploded perspective view of the outline of the physical quantity measuring device viewed in a direction different from the direction in Fig. 3.
Fig. 5 is a cross-sectional view of the outline of the physical quantity measuring device according to the first exemplary embodiment.
Fig. 6 is a front elevational view illustrating an outline of a first board and a first casing according to the first exemplary embodiment.
Fig. 7 is a front elevational view illustrating an outline of a second board and a second casing according to the first exemplary embodiment.
Fig. 8 is an enlarged cross-sectional view of an area VIII in Fig. 5.
Fig. 9 is a perspective view of an outline of a physical quantity measuring device according to a second exemplary embodiment.
Fig. 10 is another perspective view of the outline of the physical quantity measuring device viewed in a direction different from the direction in Fig. 9.
Fig. 11 is an exploded perspective view of the outline of the physical quantity measuring device according to the second exemplary embodiment.
Fig. 12 is another exploded perspective view of the outline of the physical quantity measuring device viewed in a direction different from the direction in Fig. 11.
Fig. 13 is a cross-sectional view of the outline of the physical quantity measuring device according to the second exemplary embodiment.
Fig. 14 is a front elevational view illustrating an outline of a first board and a first casing according to the second exemplary embodiment.
Fig. 15 is a front elevational view illustrating an outline of a second board and a second casing according to the second exemplary embodiment.

### DESCRIPTION OF EMBODIMENT(S)

### First Exemplary Embodiment

A physical quantity measuring device 1 according to a first exemplary embodiment of the invention will be described below with reference to the attached drawings.

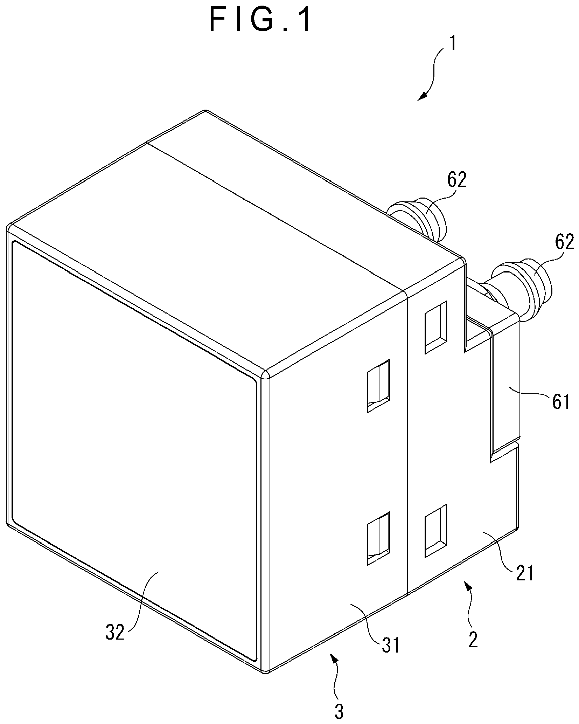

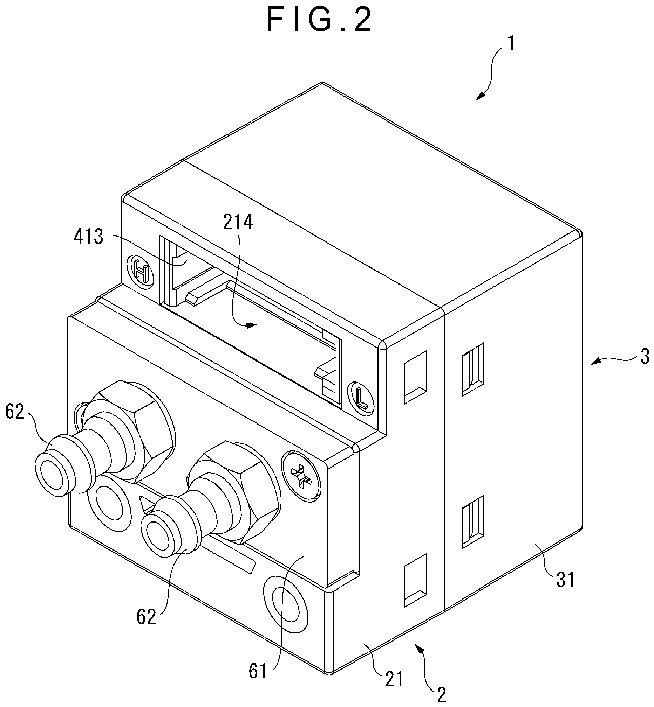

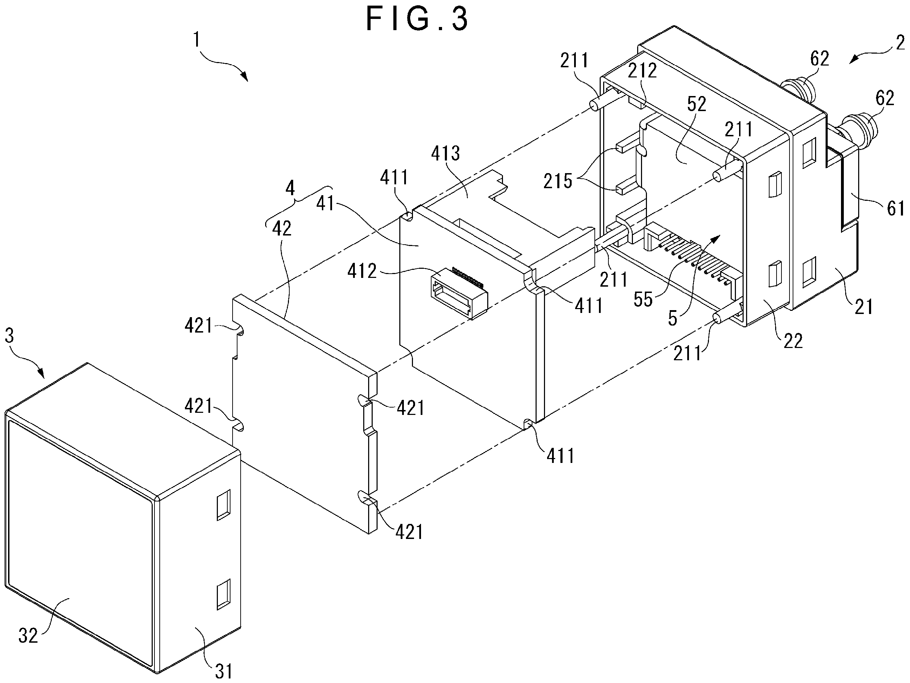

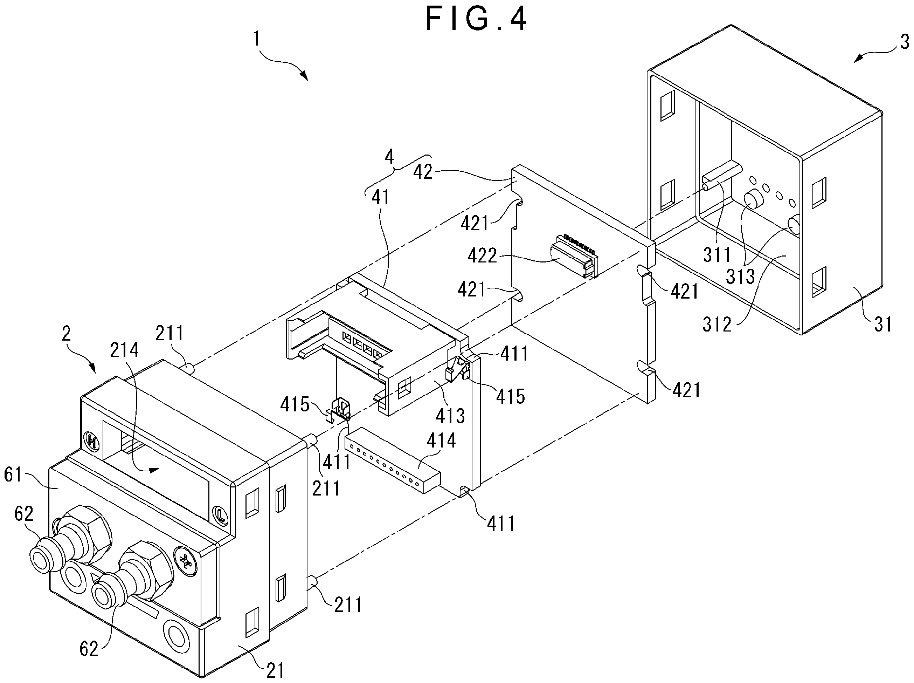

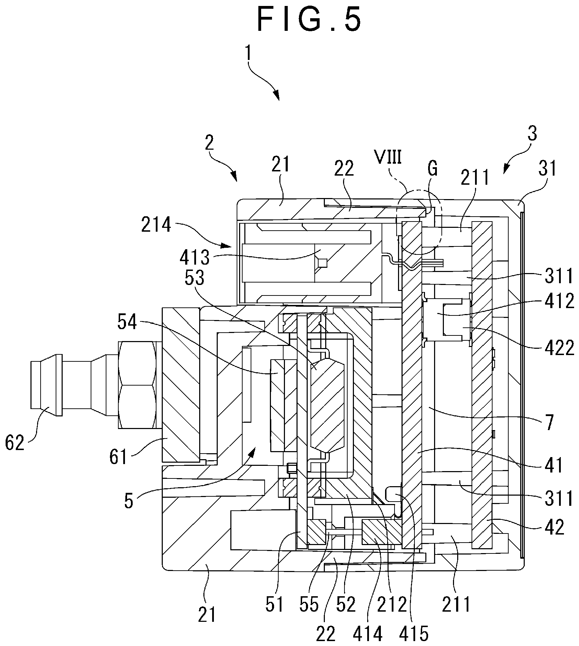

Fig. 1 is a perspective view of an outline of the physical quantity measuring device 1 according to the present exemplary embodiment. Fig. 2 is another perspective view of the outline of the physical quantity measuring device 1 viewed in a direction different from the direction in Fig. 1. Fig. 3 is an exploded perspective view of the outline of the physical quantity measuring device 1. Fig. 4 is another exploded perspective view of the physical quantity measuring device 1 viewed in a direction different from the direction in Fig. 3. Fig. 5 is a cross-sectional view of the outline of the physical quantity measuring device 1. It should be noted that the physical quantity measuring device 1 of the present exemplary embodiment is a differential pressure sensor, more specifically, a small-sized digital micro-differential pressure sensor.

As illustrated in Figs. 1 to 5, the physical quantity measuring device 1 includes a first casing 2, a second casing 3, a circuit board 4, a sensor module 5, a base member 61, ports 62, and a sealing member 7.

### First Casing 2

The first casing 2 is a hollow rectangular component configured to house the sensor module 5 and the like.

In the present exemplary embodiment, the first casing 2 includes a first casing body 21 and a fitting portion 22.

The first casing body 21 is configured to house the sensor module 5 and the like therein. In the present exemplary embodiment, the first casing body 21 is provided with first supports 211 and contact portions 212.

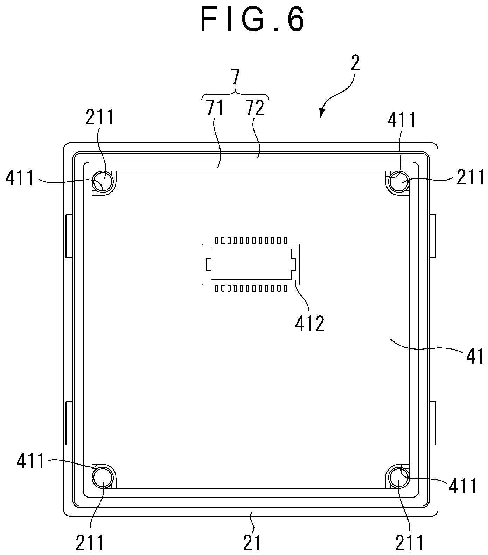

The first supports 211 are columnar components provided at four respective corners of the first casing body 21 in a manner protruding toward the second casing 3. Specifically, four first supports 211 are provided integrally with the first casing body 21 in the present exemplary embodiment (see, Fig. 6).

The contact portions 212 are respectively provided inside the first supports 211 at diagonal positions of the first casing body 21. In the present exemplary embodiment, the contact portions 212 are provided at two positions on the first casing body 21. Each of the contact portions 212 is in contact with one of later-described elastic support members 415.

In the present exemplary embodiment, an opening 214 is provided in the first casing body 21 at a position corresponding to an external terminal 413 provided on a later-described first board 41. The external terminal 413 is thus configured to be exposed to an outside of the first casing 2.

Further, in the present exemplary embodiment, a support structure 215 that contacts and supports the later-described first board 41 is provided on an inner side of the first casing body 21.

The fitting portion 22 is a thinned portion at an end of the first casing body 21. The fitting portion 22 is configured to be inserted into a later-described second casing body 31 of the second casing 3 and be fitted to an inner circumference of the second casing body 31.

In the present exemplary embodiment, a groove G is defined by the fitting portion 22 and the later-described second casing body 31 of the second casing 3 therebetween.

### Second Casing 3

As in the above-described first casing 2, the second casing 3 is a hollow rectangular component to house a later-described second board 42 of the circuit board 4 and the like.

In the present exemplary embodiment, the second casing 3, which includes the second casing body 31 and a panel sheet 32, is fitted to the above-described first casing 2. In other words, the second casing 3 is attached to the first casing 2 in the present exemplary embodiment.

The second casing body 31 is configured to house the second board 42 and the like therein. In the present exemplary embodiment, the second casing body 31 is provided with second supports 311, an interior wall portion 312, and protrusions 313. Further, the second casing body 31 is configured such that an exterior surface thereof is flush with an exterior surface of the first casing body 21 when being attached to the first casing 2. The panel sheet 32 is attached to an outer bottom surface (i.e. a front surface) of the second casing body 31. Although not illustrated in the drawings, the panel sheet 32 may include an indication of a model number, specification, and the like of the physical quantity measuring device 1.

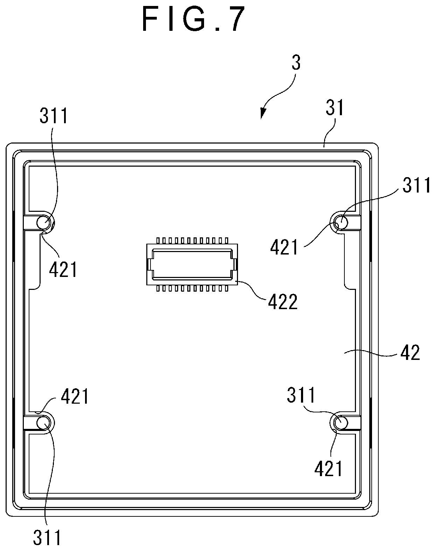

The second supports 311 are columnar components provided near four corners of the second casing body 31 in a manner protruding toward the first casing 2. Specifically, four second supports 311 are provided integrally with the second casing body 31 in the present exemplary embodiment (see Fig. 7). In the present exemplary embodiment, the second supports 311 are configured to be located inward with respect to the above-described first supports 211 of the first casing 2.

The interior wall portion 312, which is a thickened part on the inner surface of the second casing body 31, faces the fitting portion 22 of the first casing 2 when the second casing 3 is fitted to the first casing 2. The above-described groove G is defined by the fitting portion 22 of the first casing 2 and the interior wall portion 312 of the second casing 3 therebetween.

The protrusions 313, which are columnar components protruding from a bottom of the second casing body 31, are configured to be in contact with the later-described second board 42.

### Circuit Board 4

Fig. 6 is a front elevational view illustrating an outline of the first board 41 and the first casing 2. Fig. 7 is a front elevational view illustrating an outline of the second board 42 and the second casing 3.

As illustrated in Figs. 3 to 7, the circuit board 4 includes the first board 41 and the second board 42 facing each other.

As described above, the first board 41 is housed in the first casing body 21. In the present exemplary embodiment, first cutouts 411 are provided in the first board 41 at positions corresponding to the above-described first supports 211 (i.e., at four corners) of the first casing body 21. In other words, the first cutouts 411 are provided at four positions in the first board 41. Each of the first supports 211 is thus inserted through the corresponding one of the first cutouts 411 when the first board 41 is housed in the first casing body 21.

In the present exemplary embodiment, the first board 41 is provided with a connector receiver 412, the external terminal 413, an internal terminal 414, and elastic support members 415.

The connector receiver 412 is disposed on a surface of the first board 41 facing the second board 42. The connector receiver 412 is connectable with a later-described connector 422 of the second board 42. The first board 41 and the second board 42 are electrically connected by connecting the connector receiver 412 and the connector 422.

As described above, the external terminal 413 is disposed at a position corresponding to the opening 214 of the first casing body 21 to be exposed to an outside of the first casing body 21 through the opening 214. The external terminal 413 is thus connectable with wiring for external output, wiring for a power source, and the like. In other words, the external terminal 413 is provided with an external output terminal and a power source terminal.

The internal terminal 414, which is disposed at a position corresponding to later-described connection pins 55 of the sensor module 5, is connectable with the connection pins 55. The first board 41 and the sensor module 5 are electrically connected by connecting the connection pins 55 and the internal terminal 414. In other words, the first board 41 and the second board 42 are electrically connected with the sensor module 5 in the present exemplary embodiment.

The elastic support member 415 is a metallic spring member having a Z-shaped cross section. In the present exemplary embodiment, the elastic support members 415 are interposed, at diagonal positions of the first casing body 21, between the contact portions 212 of the first casing body 21 and the later-described first board 41 of the circuit board 4.

As described above, the second board 42 is housed in the second casing body 31. In the present exemplary embodiment, second cutouts 421 are provided in the second board 42 at positions corresponding to the above-described second supports 311 (i.e. near four corners) of the second casing body 31. In other words, the second cutouts 421 are provided at four positions in the second board 42. Each of the second supports 311 is thus inserted through the corresponding one of the second cutouts 421 when the second board 42 is housed in the second casing body 31.

Further, in the present exemplary embodiment, the second board 42 is provided with the connector 422.

As described above, the connector 422, which is disposed at a position corresponding to the connector receiver 412 of the first board 41, is connectable with the connector receiver 412.

### Sensor Module 5

The sensor module 5 includes a sensor printed circuit board (PCB) 51, a sensor cover 52, an electronic component 53, a detector 54, and the connection pins 55.

The sensor PCB 51 is a board for components such as the electronic component 53 and the detector 54 to be attached. In the present exemplary embodiment, the sensor PCB 51 is disposed to face the above-described first board 41. The surface of the sensor PCB 51 facing the first board 41 is covered with the sensor cover 52.

The electronic component 53, which is disposed on a surface of the sensor PCB 51 facing the first board 41, is covered with the sensor cover 52. In the present exemplary embodiment, the electronic component 53 includes a signal converter to convert/tune signals outputted from the detector 54 and the like.

The detector 54 is configured to detect a pressure of a measurement target fluid introduced through ports 62 and output the signals according to the pressure to the electronic component 53.

As described above, the connection pins 55, which are disposed at a position corresponding to the internal terminal 414 of the first board 41, are connectable with the internal terminal 414.

### Base Member 61 and Ports 62

The base member 61 is a plate-shaped component attached to a rear side of the first casing body 21. In the present exemplary embodiment, the base member 61 has two holes (not illustrated in the drawings) to which two ports 62 are attached. A filter (not illustrated in the drawings) is inserted at a rear side of the base member 61 (i.e. a side near the first casing body 21).

The ports 62 are cylindrical components through which the measurement target fluid is introduced. The measurement target fluid is thus introduced into a space inside the first casing body 21, in which the detector 54 is disposed, through the ports 62 and the filter. As described above, two ports 62 are attached to the base member 61 in the present exemplary embodiment. Thus, the physical quantity measuring device 1 of the present exemplary embodiment is a differential-pressure sensor configured to detect a differential pressure of the measurement target fluid introduced into the two ports 62.

The invention is not limited to the above configuration. For instance, no filter may be provided at the rear side of the base member 61.

### Sealing Member 7

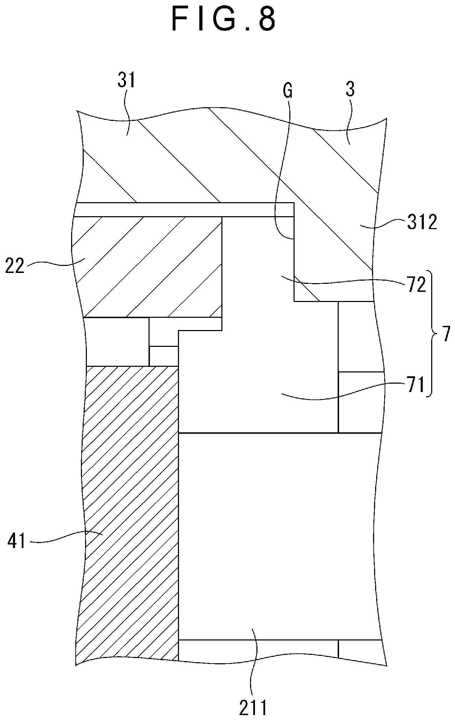

Fig. 8 is an enlarged cross-sectional view of an area VIII in Fig. 5.

As illustrated in Figs. 5, 6, and 8, the sealing member 7 is a component made of rubber or a resin member and configured to seal a space between the first casing 2 and the second casing 3. The interior space defined by the first casing 2 and the second casing 3 can thus be hermetically sealed when the first casing 2 and the second casing 3 are fitted to each other.

In the present exemplary embodiment, the sealing member 7 includes a body portion 71 and a sealing portion 72.

The body portion 71 is in a form of an annular rectangle. In the present exemplary embodiment, the body portion 71 is supported by the first board 41. It is thus not necessary to separately provide, on the first casing 2, a component for supporting the body portion 71 of the sealing member 7.

In the present exemplary embodiment, the body portion 71 is disposed outside the first supports 211 provided at the four corners of the first casing body 21. In other words, the position of the body portion 71 is determined by the four first supports 211. The sealing member 7 can thus be restrained from being misaligned when the physical quantity measuring device 1 is assembled, thereby facilitating the assembling process of the physical quantity measuring device 1.

The sealing portion 72 extends outwardly from the body portion 71 to be disposed in the above-described groove G. The gap between the first casing 2 and the second casing 3 is thus sealed.

In the present exemplary embodiment, the sealing portion 72 is smaller in thickness than the body portion 71. The width of the groove G for the sealing portion 72 to be disposed can thus be reduced. This reduces the thicknesses of wall portions of the first casing 2 and the second casing 3 necessary for disposing the sealing member 7, thus achieving the downsize of the physical quantity measuring device 1.

### Support Structure of First Board 41 and Second Board 42

Next, the support structure of the first board 41 and the second board 42 will be described.

As described above, the support structure 215 of the first casing 2 is in contact with a surface of the first board 41 facing the sensor module 5. The first board 41 is thus supported by the first casing 2. Further, the second supports 311 inserted through the second cutouts 421 of the second board 42 are in contact with the surface of the first board 41 facing the second board 42. In other words, the first board 41 is also supported by the second casing 3. As described above, the first board 41 is held between and supported by the support structure 215 of the first casing 2 and the second supports 311 of the second casing 3.

In addition, the first supports 211 are inserted through the first cutouts 411 of the first board 41. The position of the first board 41 is thus determined by the first supports 211 of the first casing 2.

As described above, the first board 41 in the present exemplary embodiment, which is held between the first casing 2 and the second casing 3, is positioned and supported by the first casing 2. Accordingly, the first board 41 can be securely supported.

Similarly, the protrusions 313 of the second casing 3 are in contact with a surface of the second board 42 facing the bottom of the second casing 3. The second board 42 is thus supported by the second casing 3. Further, the first supports 211 inserted through the first cutouts 411 of the first board 41 are in contact with a surface of the second board 42 facing the first board 41. In other words, the second board 42 is also supported by the first casing 2. As described above, the second board 42 is held between and supported by the protrusions 313 of the second casing 3 and the first supports 211 of the first casing 2.

In addition, the second supports 311 are inserted through the second cutouts 421 of the second board 42. The position of the second board 42 is thus determined by the second supports 311 of the second casing 3.

As described above, the second board 42 in the present exemplary embodiment, which is held between the first casing 2 and the second casing 3, is positioned and supported by the second casing 3. Accordingly, the second board 42 can be securely supported.

Further, as described above, the elastic support members 415 in a form of spring components are interposed between the contact portions 212 of the first casing 2 and the first board 41 in the present exemplary embodiment. The first board 41 is thus biased by the elastic support members 415 toward the second casing 3. Accordingly, even when there is a manufacturing error in the thickness of the first board 41, such an error can be absorbed by the elastic support members 415. The first board 41 and the second supports 311 can thus be securely brought into contact with each other, so that the first board 41 can be securely supported.

### Advantage(s) of First Exemplary Embodiment

The following advantages can be achieved by the present exemplary embodiment described above.
(1) In the present exemplary embodiment, the first board 41 is provided with the four first cutouts 411 and the second board 42 is provided with the four second cutouts 421. The first supports 211 of the first casing 2 are inserted through the first cutouts 411 of the first board 41, and the first board 41 is supported by the second supports 311 of the second casing 3. In other words, the first board 41, whose position is determined by the first supports 211, is supported by the second supports 311. Similarly, the second supports 311 of the second casing 3 are inserted through the second cutouts 421 of the second board 42, and the second board 42 is supported by the first supports 211 of the first casing 2. In other words, the second board 42, whose position is determined by the second supports 311, is supported by the first supports 211. As described above, the first board 41 and the second board 42 of the circuit board 4, whose positions are determined by the first supports 211 and the second supports 311 respectively integrated with the first casing 2 and the second casing 3, are supported by the first supports 211 and the second supports 311. This enables the first board 41 and the second board 42 to be securely supported without increasing the number of components.
(2) In the present exemplary embodiment, since the elastic support members 415 are interposed between the contact portions 212 of the first casing 2 and the first board 41, even when there is a manufacturing error in the thickness of the first board 41, such an error can be absorbed by the elastic support members 415. Accordingly, the first board 41 can be securely supported.
(3) In the present exemplary embodiment, the first board 41 and the second board 42 are supported by the first supports 211 and the second supports 311 in a form of columnar protrusions. This enables the first board 41 and the second board 42 to be supported with a simple structure.
(4) In the present exemplary embodiment, the position of the body portion 71 of the sealing member 7 is determined by the four first supports 211. Accordingly, the sealing member 7 is kept from being misaligned in assembling the physical quantity measuring device 1. The physical quantity measuring device 1 is thus easily assembled. Further, since the sealing portion 72, which is an extension of the body portion 71 having a thickness smaller than that of the body portion 71, is disposed in the groove G formed between the first casing 2 and the second casing 3, the width of the groove G can be reduced. This reduces the thicknesses of wall portions of the first casing 2 and the second casing 3 necessary for disposing the sealing member 7, thus achieving the downsize of the physical quantity measuring device 1.
(5) In the present exemplary embodiment, the body portion 71 of the sealing member 7 can be supported by the first board 41, thus eliminating the necessity of a separate structure for supporting the sealing member 7. This simplifies the structure of the first casing 2 and the second casing 3.
(6) In the present exemplary embodiment, the support structure 215 that contacts and supports the first board 41 is provided for the first casing 2. The first board 41 is thus held between the support structure 215 of the first casing 2 and the second supports 311 of the second casing 3, so that the first board 41 can be securely supported.
(7) In the present exemplary embodiment, the protrusions 313 that contact and support the second board 42 are provided for the second casing 3. The second board 42 is thus held between the first supports 211 of the first casing 2 and the protrusions 313 of the second casing 3, so that the second board 42 can be securely supported.

### Second Exemplary Embodiment

Next, a physical quantity measuring device 1A according to a second exemplary embodiment of the invention will be described below with reference to the attached drawings.

The physical quantity measuring device 1A according to the second exemplary embodiment is different from the physical quantity measuring device 1 in the first exemplary embodiment in that a first board 41A is supported by second supports 93A provided for a support member 9A that holds a display 8A and a position of a second board 42A is determined by the second supports 93A. Components in the second exemplary embodiment that are the same or similar to those in the first exemplary embodiment are denoted by the same reference numerals to omit detailed description thereof. The first board 41A of the second exemplary embodiment includes, as in the above-described first board 41 of the first exemplary embodiment, first cutouts 411A, a connector receiver 412A, an external terminal 413A, an internal terminal 414A, and elastic support members 415A. The second board 42A includes, as in the above-described second board 42 of the first exemplary embodiment, second cutouts 421A and a connector 422A.

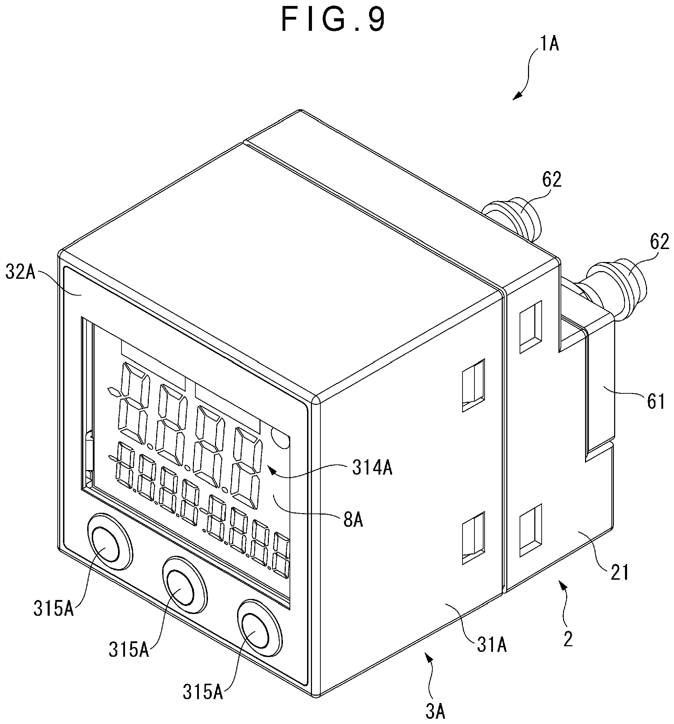

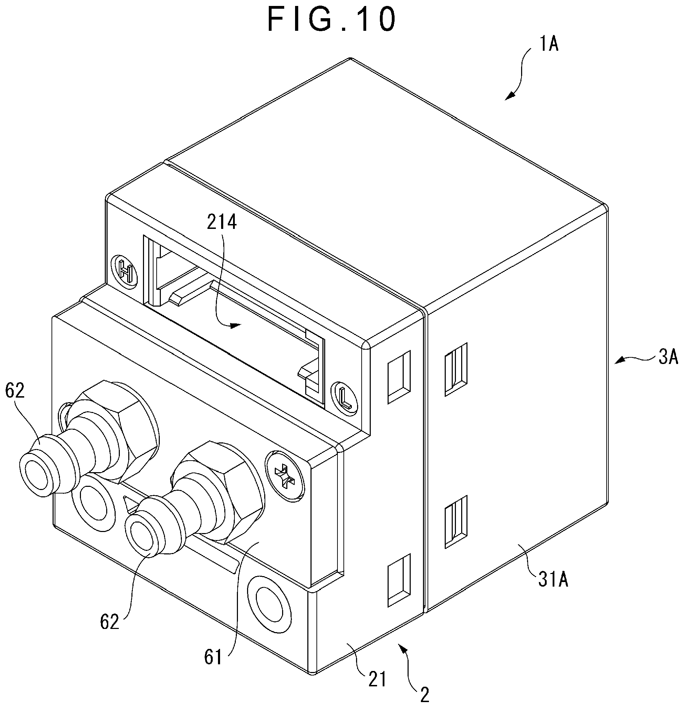

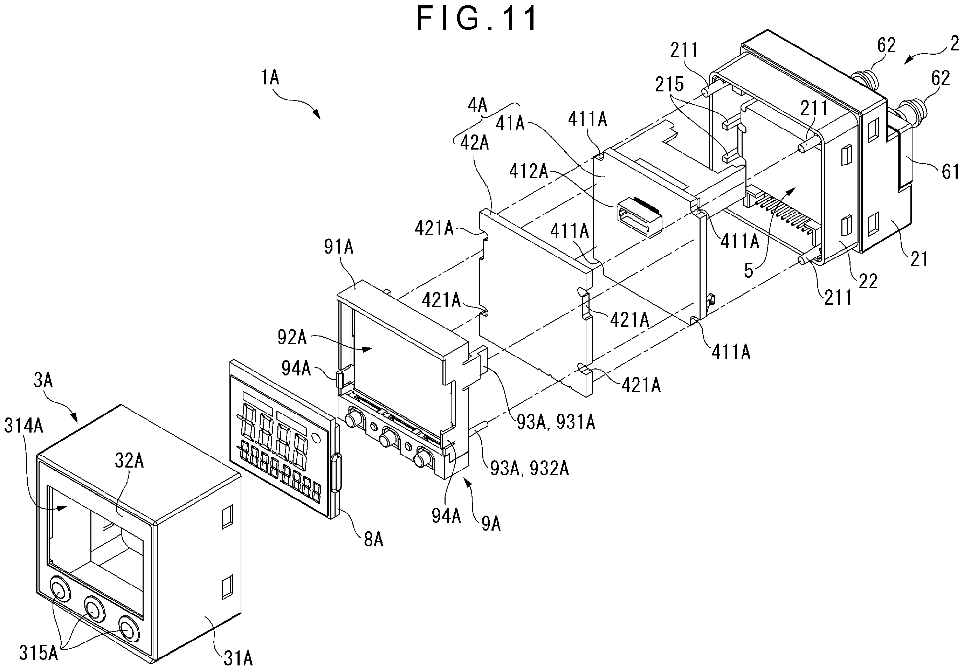

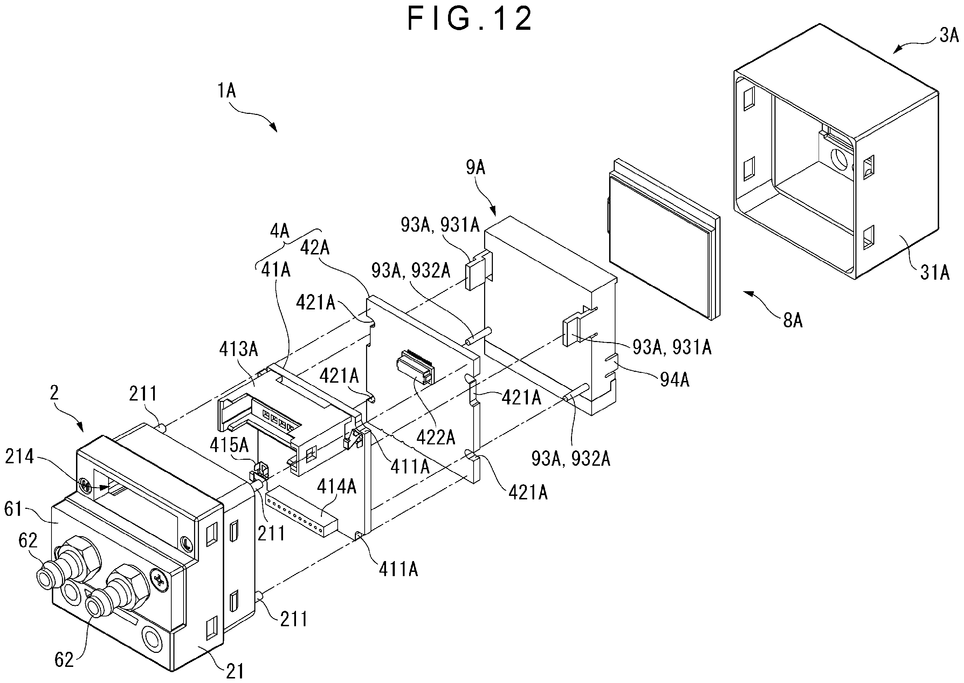

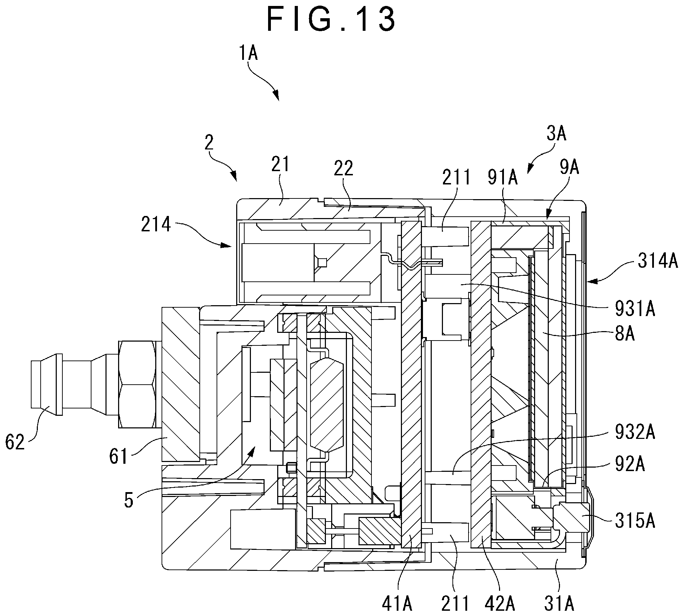

Fig. 9 is a perspective view of an outline of the physical quantity measuring device 1A according to the present exemplary embodiment. Fig. 10 is another perspective view of the outline of the physical quantity measuring device 1A viewed in a direction different from the direction in Fig. 9. Fig. 11 is an exploded perspective view of the outline of the physical quantity measuring device 1A. Fig. 12 is another exploded perspective view of the physical quantity measuring device 1A viewed in a direction different from the direction in Fig. 11. Fig. 13 is a cross-sectional view of the outline of the physical quantity measuring device 1A.

As illustrated in Figs. 9 to 13, the physical quantity measuring device 1A includes a second casing 3A, a circuit board 4A, the display 8A, and the support member 9A.

### Second Casing 3A

As in the above-described second casing 3, the second casing 3A is a hollow rectangular component to house, for instance, the second board 42A of circuit board 4A, the display 8A, and the support member 9A to be described later.

In the present exemplary embodiment, the second casing 3A, which includes a second casing body 31A and a panel sheet 32A, is fitted to the above-described first casing 2. In other words, the second casing 3A is attached to the first casing 2 in the present exemplary embodiment.

The second casing body 31A is configured to house the second board 42A, the display 8A, the support member 9A, and the like therein. Further, the second casing body 31A is configured such that an exterior surface thereof is flush with an exterior surface of the first casing body 21 when being attached to the first casing 2. An opening 314A is formed at a bottom of the second casing body 31A. This enables a user to see the display 8A through the opening 314A. The panel sheet 32A is attached to an outer bottom surface (i.e. a front surface) of the second casing body 31A to surround the opening 314A. Button operation portions 315A are provided at a lower part of the opening 314A. In the present exemplary embodiment, three button operation portions 315A are provided to allow a user to perform various operations by operating the button operation portions 315A.

### Display 8A

The display 8A, which is a liquid crystal display (LCD) configured to digitally display the differential pressure detected by the sensor module 5, is electrically connected with the second board 42A of the circuit board 4A. In the present exemplary embodiment, the display 8A is fitted to a later-described display-holding recess 92A of the support member 9A and is held between display-holding claws 94A.

As described above, the differential pressure digitally displayed on the display 8A is seen through the opening 314A in the second casing body 31A.

### Support Member 9A

The support member 9A is a component housed in the second casing body 31A to hold the display 8A. In the present exemplary embodiment, the support member 9A is also configured to determine the position of the second board 42A and support the first board 41A.

The support member 9A includes a support member body 91A, the display-holding recess 92A, second supports 93A, and the display-holding claws 94A.

The support member body 91A, which has a substantially rectangular parallelepiped shape, is disposed between the display 8A and the second board 42A. The display-holding recess 92A recessed in accordance with the shape of the display 8A is formed on a side of the support member body 91A facing the display 8A. Two display-holding claws 94A extending toward the display 8A are formed on an outer periphery of the support member body 91A. The support member body 91A is thus capable of holding the display 8A by fitting the display 8A into the display-holding recess 92A and holding the display 8A between the display-holding claws 94A. The display-holding recess 92A and the display-holding claws 94A define a display holder of the invention.

The second supports 93A protruding toward the first casing 2 are provided on a side of the support member body 91A facing the second board 42A.

The second supports 93A are provided near four corners of the support member 9A in a manner protruding toward the first casing 2. In the present exemplary embodiment, the second supports 93A include claw-shaped support portions 931A and columnar support portions 932A.

The claw-shaped support portions 931A are claw-shaped components integrated with the support member 9A. In the present exemplary embodiment, two claw-shaped support portions 931A are provided. The columnar support portions 932A are columnar components integrated with the support member 9A. In the present exemplary embodiment, two columnar support portions 932A are provided. Thus, four second supports 93A are provided in the present exemplary embodiment.

### Support Structure of First Board 41A and Second Board 42A

Next, the support structure of the first board 41A and the second board 42A of the circuit board 4A will be described.

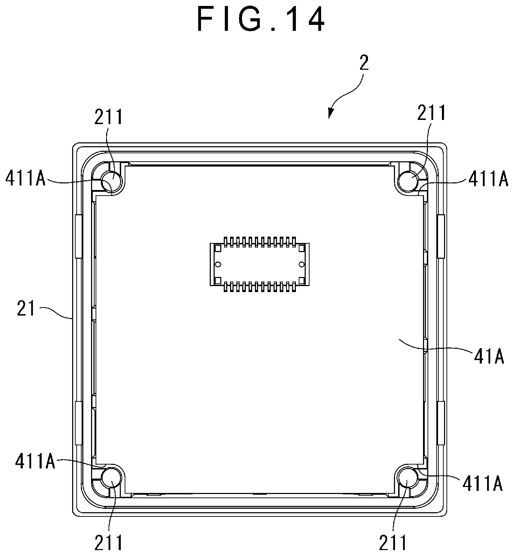

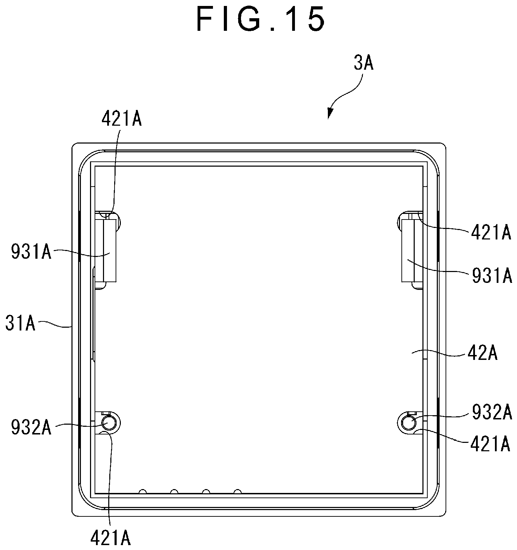

Fig. 14 is a front elevational view illustrating an outline of the first board 41 and the first casing 2. Fig. 15 is a front elevational view illustrating an outline of the second board 42A and the second casing 3A.

As illustrated in Figs. 9 to 15, the support structure 215 of the first casing 2 is in contact with a surface of the first board 41A facing the sensor module 5. The first board 41A is thus supported by the first casing 2. Further, the second supports 93A inserted through the second cutouts 421A of the second board 42A are in contact with a surface of the first board 41A facing the second board 42A. In other words, the first board 41A is also supported by the support member 9A housed in the second casing 3A. As described above, the first board 41A is held between and supported by the support structure 215 of the first casing 2 and the second supports 93A of the support member 9A.

In addition, the first supports 211 are inserted through the first cutouts 411A of the first board 41A. The position of the first board 41A is thus determined by the first supports 211 of the first casing 2.

As described above, the first board 41A in the present exemplary embodiment, which is held between the first casing 2 and the support member 9A, is positioned and supported by the first casing 2. Accordingly, the first board 41A can be securely supported.

Similarly, a surface of the second board 42A facing the support member body 91A of the support member 9A is in contact with a surface of the support member body 91A opposite the surface provided with the display-holding recess 92A. The second board 42A is thus supported by the support member 9A. Further, the first supports 211 inserted through the first cutouts 411A of the first board 41A are in contact with a surface of the second board 42A facing the first board 42A. In other words, the second board 42A is also supported by the first casing 2. As described above, the second board 42A is held between and supported by the support member 9A and the first supports 211 of the first casing 2.

In addition, the second supports 93A are inserted through the second cutouts 421A of the second board 42A. The position of the second board 42A is thus determined by the second supports 93A of the support member 9A.

As described above, the second board 42A in the present exemplary embodiment, which is held between the first casing 2 and the support member 9A, is positioned and supported by the support member 9A. Accordingly, the second board 42A can be securely supported.

### Advantage(s) of Second Exemplary Embodiment

The following advantages can be achieved by the present exemplary embodiment described above.
(8) In the present exemplary embodiment, the first supports 211 of the first casing 2 are inserted through the first cutouts 411A of the first board 41A, and the first board 41A is supported by the second supports 93A of the support member 9A. In other words, the first board 41A, whose position is determined by the first supports 211, is supported by the second supports 93A. Similarly, the second supports 93A of the support member 9A are inserted through the second cutouts 421A of the second board 42A, and the second board 42A is supported by the first supports 211 of the first casing 2. In other words, the second board 42A, whose position is determined by the second supports 93A, is supported by the first supports 211. As described above, the first board 41A and the second board 42A of the circuit board 4A, whose positions are determined by the first supports 211 and the second supports 93A respectively integrated with the first casing 2 and the support member 9A, are supported by the first supports 211 and the second supports 93A. This enables the first board 41A and the second board 42A to be securely supported without increasing the number of components.

### Modifications

It should be noted that the invention is not limited to the above-described exemplary embodiments but includes modifications, improvements, and the like as long as an object of the invention can be achieved.

In the above exemplary embodiments, the elastic support members 415, 415A brought into contact with the contact portions 212 of the first casing 2 are spring components having a Z-shaped cross section. The invention, however, is not limited thereto. The elastic support members are in any desired form (e.g. a coil spring component) as long as being capable of biasing the first board toward the second casing. Further, the scope of the invention encompasses an arrangement without any elastic support member.

In the above exemplary embodiments, the first boards 41, 41A are housed in the first casing 2. The invention, however, is not limited thereto. For instance, the first board is optionally housed in the second casing.

Similarly, in the above exemplary embodiments, the second boards 42, 42A are housed in the second casing 3, 3A. The invention, however, is not limited thereto. For instance, the second board is optionally housed in the first casing.

In the first exemplary embodiment, the first supports 211 and the second supports 311 are columnar components. The invention, however, is not limited thereto. For instance, the first and second supports are optionally in a form of rectangular columns or hollow pipe-shaped components.

Similarly, the second supports 93A are claw-shaped or columnar components in the second exemplary embodiment. The invention, however, is not limited thereto. For instance, the first and second supports are optionally in a form of rectangular columns or hollow pipe-shaped components.

In the exemplary embodiments, four first supports 211 and four second supports 311, 93A are provided. The invention, however, is not limited thereto. For instance, the number of the first supports and the second supports may each be five or more or three or less. It is only necessary that a plurality of first supports and a plurality of second supports are provided.

In the exemplary embodiments, the sealing member 7 includes the body portion 71 in a form of an annular rectangle and the sealing portion 72 extending outward from the body portion 71. The invention, however, is not limited thereto. For instance, the sealing member is optionally provided solely by the body portion disposed in the groove formed between the first casing and the second casing.

In the exemplary embodiments, the physical quantity measuring device 1 is a differential-pressure sensor configured to detect a differential pressure of the measurement target fluid introduced into the two ports 62. The invention, however, is not limited thereto. For instance, the physical quantity measuring device is optionally a pressure sensor provided with a single port and configured to detect a pressure of the measurement target fluid introduced into the port or a temperature sensor configured to detect a temperature of the measurement target fluid. It is only necessary for the physical quantity measuring device to be configured to detect a physical quantity of the measurement target fluid.

In the above exemplary embodiments, the first boards 41, 41A are provided with the first cutouts 411, 411A at four corners. The invention, however, is not limited thereto. For instance, a plurality of first cutouts are optionally provided near a central part of the first board so that the first supports of the first casing may be inserted through the first cutouts. The position and the number of the first cutouts in the first board are designed as desired.

Similarly, the second boards 42, 42A are provided with the second cutouts 421, 421A near four corners in the above exemplary embodiments. The invention, however, is not limited thereto. For instance, a plurality of second cutouts are optionally provided near a central part of the second board so that the second supports of the second casing may be inserted through the second cutouts. The position and the number of the second cutouts in the second board are designed as desired.

### EXPLANATION OF CODES

1, 1A... physical quantity measuring device, 2...first casing, 3, 3A...second casing, 4, 4A...circuit board, 5...sensor module, 7...sealing member, 8A...display, 9A...support member, 21... first casing body, 22...fitting portion, 31, 31A...second casing body, 32, 32A...panel sheet, 41, 41A...first board, 42, 42A...second board, 51...sensor PCB, 52...sensor cover, 53...electronic component, 54...detector, 55...connection pin, 61... base member, 62...port, 71... body portion, 72...sealing portion, 91A...support member body, 92A...display-holding recess, 93A...second support, 94A...display-holding claw, 211...first support, 212...contact portion, 214...opening, 215...support structure, 311...second support, 312...interior wall portion, 313...protrusion, 314A...opening, 315A...button operation portion, 411, 411A...first cutout, 412, 412A...connector receiver, 413, 413A...external terminal, 414, 414A...internal terminal, 415, 415A...elastic support member, 421, 421A...second cutout, 422, 422A...connector, 931A...claw-shaped support portion, 932A...columnar support portion, G...groove

## Claims

1. A physical quantity measuring device comprising:
a sensor module comprising a detector configured to detect a physical quantity of a measurement target fluid;
a circuit board electrically connected with the sensor module, the circuit board comprising a first board and a second board facing each other;
a first casing that houses the sensor module and the first board; and
a second casing that houses the second board, the second casing being attached to the first casing, wherein
the first board is provided with a plurality of first cutouts,
the second board is provided with a plurality of second cutouts,
the first casing is provided with a plurality of first supports inserted through the first cutouts to support the second board, the first supports being integrated with the first casing, and
the second casing is provided with a plurality of second supports inserted through the second cutouts to support the first board, the second supports being integrated with the second casing.

2. A physical quantity measuring device comprising:
a sensor module comprising a detector configured to detect a physical quantity of a measurement target fluid;
a circuit board electrically connected with the sensor module, the circuit board comprising a first board and a second board facing each other;
a first casing that houses the sensor module and the first board;
a second casing that houses the second board, the second casing being attached to the first casing;
a display provided for the second casing; and
a support member housed in the second casing, the support member comprising a display holder that holds the display, wherein
the first board is provided with a plurality of first cutouts,
the second board is provided with a plurality of second cutouts,
the first casing is provided with a plurality of first supports inserted through the first cutouts to support the second board, the first supports being integrated with the first casing, and
the support member is provided with a plurality of second supports inserted through the second cutouts to support the first board, the second supports being integrated with the support member.

3. The physical quantity measuring device according to claim 1 or 2, wherein
the first casing is provided with a contact portion, and
an elastic support is interposed between the contact portion and the first board.

4. The physical quantity measuring device according to any one of claims 1 to 3, wherein
the plurality of first supports are columnar components protruding toward the second casing, and
the plurality of second supports are columnar components protruding toward the first casing.

5. The physical quantity measuring device according to any one of claims 1 to 4, wherein
a groove is formed between the first casing and the second casing, and
the physical quantity measuring device further comprises a sealing member comprising an annular body portion whose position is determined by the plurality of first supports and a sealing portion extending toward an outer periphery from the body portion, the sealing portion being disposed in the groove, the sealing portion being thinner than the body portion.

6. The physical quantity measuring device according to claim 5, wherein
the body portion is supported by the first board.
